# EUROPÄISCHE PATENTSCHRIFT

(11) **EP 0 544 132 B1**
(45) Veröffentlichungstag und Bekanntmachung des Hinweises auf die Patenterteilung: **09.10.1996**
(21) Anmeldenummer: 92119009.6
(22) Anmeldetag: 06.11.1992
(51) Int. Cl.: H02H 6/00, H02H 7/085

(54) **Verfahren und Vorrichtung zur Vermeidung von Ueberhitzung von Elektromotoren**
Method and device for avoiding the overheating of electric motors
Procédé et dispositif pour éviter la surchauffe des moteurs électriques

(30) Priorität: 23.11.1991 DE 9114599 U
(43) Veröffentlichungstag der Anmeldung: 02.06.1993
(73) Patentinhaber: Gretsch-Unitas GmbH Baubeschläge, D-71254 Ditzingen (DE)
(72) Erfinder: Walter, Renz, Dipl.-Ing. (FH), W-7257 Ditzingen (DE); Gerhard, Münch, W-7145 Markgröningen (DE)
(74) Vertreter: Schmid, Berthold, Dipl.-Ing.

(56) Entgegenhaltungen:
- DE-A- 4 030 475
- US-A- 4 884 162

## Beschreibung

Die Erfindung betrifft ein Verfahren zur Vermeidung von Überhitzung bei Elektromotoren für Stellantriebe, insbesondere an Fenstern, Türen, Markisen, Rolladen od. dgl., wobei fortlaufend die Einschalt- und Ausschaltzustände des Motors erfaßt und mittels wenigstens eines Stellwerks die Dauer der Einschalt- sowie der Ausschaltzustände bewertet wird, indem Zeitabschnitten der Dauer der Einschaltzustände sowie der Dauer der Ausschaltzustände Zählinkremente zugeordnet werden und durch Verstellen eines Zählwerks um die Zählinkremente von der bewerteten Dauer der Einschaltzustände die bewertete Dauer der Ausschaltzustände abgezogen wird und anschließend der Differenzwert mit einem insbesondere einstellbaren Grenzwert verglichen, bei Überschreiten des Grenzwerts eine Abschaltvorrichtung für den Motor betätigt und dieser solange abgeschaltet wird. bis der Differenzwert einen bestimmten unter dem Grenzwert liegenden Betrag, insbesondere den Wert Null erreicht hat. Die Erfindung betrifft außerdem eine Vorrichtung zur Ausübung des vorstehend beschriebenen Verfahrens mit wenigstens einem Stellwerk zum Verstellen des Zählerstands an einem Zählwerk, wobei im Einschaltzustand der Zählerstand erhöht und im Ausschaltzustand der Zählerstand erniedrigt wird und das Zählwerk mit einem Vergleichsglied verbunden ist, das den Zählerstand mit einem einstellbaren Grenzwert vergleicht und seinerseits mit einer Motorabschaltvorrichtung verbunden ist.

Als Stellantriebe der eingangs genannten Art werden besonders kleine Einphasen-Asynchronmotoren bevorzugt, die zusammen mit einem Spindelgetriebe und den elektrischen Anschlüssen je nach Einbaulage am Blendrahmen für einen beweglichen Tür- oder Fensterflügel oder an einer Wandfläche unterzubringen sind, wobei das Spindelgetriebe direkt oder über ein Gestänge mit dem zu öffnenden Flügel bzw. Element verbunden ist.

Insbesondere bei solchen Türen, Fenstern, Markisen oder Rolladen, die mit Hilfe von Licht-, Temperatur- oder Rauchsensoren od. dgl. automatisch auf oder zu steuerbar sind, kann es vorkommen, daß zu häufige Einschaltphasen und zu kurze Ruhepausen eine Motorüberhitzung bewirken. Eine Überhitzung kann auch bei Handschaltung vorkommen, insbesondere wenn bei der bisher erforderlichen komplizierten Einstellung des Antriebs der Motor häufig bedient wird. Die bisher zur Erfassung und Vermeidung von Motorüberhitzungen üblichen Thermoschalter werden aufgrund der Kleinheit der Motoren außen auf das Statorpaket aufgeklebt. Dabei ist ein schnelles Ansprechen dieser Thermoschalter auf eine unzulässige Temperaturerhöhung des Motorinneren aufgrund der Verzögerungszeit bei der Temperaturleitung durch das Statorpaket nicht gewährleistet, so daß die Stellmotoren zum Durchbrennen neigen. Aus diesem Grunde besteht das Bedürfnis, die Überhitzung solcher Elektromotoren für Stellantriebe mit Sicherheit zu vermeiden.

In der DE-A-40 30 475 sind ein gattungsgemäßes Verfahren sowie eine gattungsgemäße Vorrichtung beschrieben. Im Laufe des vorbekannten Verfahrens wird ein Zählwerk um Zählinkremente verstellt, die mit der Temperaturanstiegskennlinie bzw. mit der Temperaturabfallkennlinie des betreffenden Motors korrelieren. Zu diesem Zweck muß zunächst für jede Phase der Motor-Betriebsdauer sowie für jede Phase der Motor-Stillstandsdauer unter Zuhilfenahme der Motor-Temperaturkennlinie jeweils ein Zählinkrement betragsmäßig ermittelt werden. Im Motorbetrieb ist dann feztzustellen, in welcher Phase seines Ausschalt- oder seines Einschaltzustandes sich der Motor befindet. Anschließend wird das der betreffenden Phase zugeordnete Zählinkrement abgerufen und zu dem Zählerstand des Zählwerks addiert oder von diesem subtrahiert. Das vorbekannte Verfahren ist dementsprechend aufwendig.

Ausgehend von dem Verfahren gemäß der DE-A-40 30 475 strebt die Erfindung eine Verfahrensvereinfachung an. Vorrichtungsbezogen liegt der Erfindung die Aufgabe zugrunde, eine Vorrichtung zur Ausübung des erfindungsgemäß vereinfachten Verfahrens bereitzustellen.

Die verfahrensbezogene Aufgabe wird im Sinne der Erfindung dadurch gelöst, daß den Zeitabschnitten der Dauer der Einzchaltzustände sowie der Dauer der Ausschaltzustände bei jeweils gleicher Länge der Zeitabschnitte jeweils konstante Zahlinkremente zugeordnet und diese zuvor an dem wenigstens einen Stellwerk eingegeben werden. Die Erfindung geht dabei von der Erkenntnis aus, daß sich die Temperatur des Stellantriebsmotors indirekt durch eine Überwachung der Lauf- und der Ruhezustände des Motors erfassen läßt. Einfacherweise werden im Laufe des erfindungsgemäßen Verfahrens gleichlange Zeitabschnitte der Motor-Betriebsdauer sowie der Motor-Stillstandsdauer mit jeweils einheitlichen Zählinkrementen bewertet. Dementsprechend entfällt die Notwendigkeit, vor jeder Verstellung des Zählwerks zunächst festzustellen, in welcher Phase des Einschalt- bzw. in welcher Phase des Ausschaltzustandes sich der Motor des Stellantriebs befindet. Eine Variierung der konstanten Zählinkremente ist einfach dadurch moglich, daß geänderte Werte an dem Stellwerk eingegeben werden und dann an die Stelle der zuvor addierten bzw. subtrahierten Werte treten. Vorteilhafterweise erlaubt das beschriebene Verfahren eine sichere und berührungslose, weil indirekte Erfassung der Überhitzungsgefahr, wobei diese Erfassung nicht durch die Temperatur in der Umgebung des Stellantriebsmotors beeinflußt wird.

In vorteilhafter Weiterbildung des erfindungsgemäßen Verfahrens ist vorgesehen, daß den Einschaltzuständen Zählinkremente zugeordnet werden, welche von den den Ausschaltzuständen zugeordneten Zählinkrementen verschieden sind.

Eine die obige Aufgabe lösende Vorrichtung zur Durchführung des erfindungsgemäßen Verfahrens ist dadurch gekennzeichnet, daß die einen Eingänge von zwei UND-Gliedern mit einem Zeitgeber und die anderen je mit einem Sensor für den Ausschalt- und den Einschaltzustand des Motors verbunden sind, sowie die Ausgänge an je ein Stellwerk für das Zählwerk angeschlossen sind, wobei das Stellwerk für den Einschaltzustand den Zählerstand für gleiche Zeitabschnitte um konstante Zählinkremente erhöht und das Stellwerk für den Ausschaltzustand den Zählerstand für gleiche Zeitabschnitte um konstante Zählinkremente erniedrigt und an beiden Stellwerken die betreffenden Zählinkremente eingebbar sind.

Vorteilhafterweise besteht die erfindungsgemäße Vorrichtung aus digital arbeitenden Schalt- und Zählgliedern, so daß sie weitgehend sicher gegen Störbeeinflussungen aus der Umgebung des Stellantriebs ist. In einer vorteilhaften Ausbildungsform der erfindungsgemäßen Vorrichtung sind die Zählinkremente des Vorwärts-und des Rückwärtszählers jeweils unterschiedlich groß. Durch die dadurch bewirkte unterschiedliche Gewichtung der Einschaltdauer im Vergleich mit der Ausschaltdauer wird der Tatsache Rechnung getragen, daß die Erwärmung des Stellantriebsmotors schneller als dessen Abkühlung abläuft. Vorzugsweise ist das Stellwerk für den Einschaltzustand einstellbar und erhöht sich der Zählerstand des Zahlwerkes bei jedem Impuls des Zeitgebers um den eingestellten Wert des Stellwerkes.

Bei einer bevorzugten Ausführungsform der erfindungsgemäßen Vorrichtung ist das Vergleichsglied mit einer Anzeigevorrichtung, insbesondere einer Leuchtdiode verbunden, welche die Überschreitung des Grenzwertes anzeigt.

Nach einem weiteren Merkmal der Erfindung ist ein Mikrocomputer vorgesehen, wobei einige oder alle der Steuerelemente als Programmteile ausgebildet sind und der Computer somit Steuerfunktionen übernimmt.

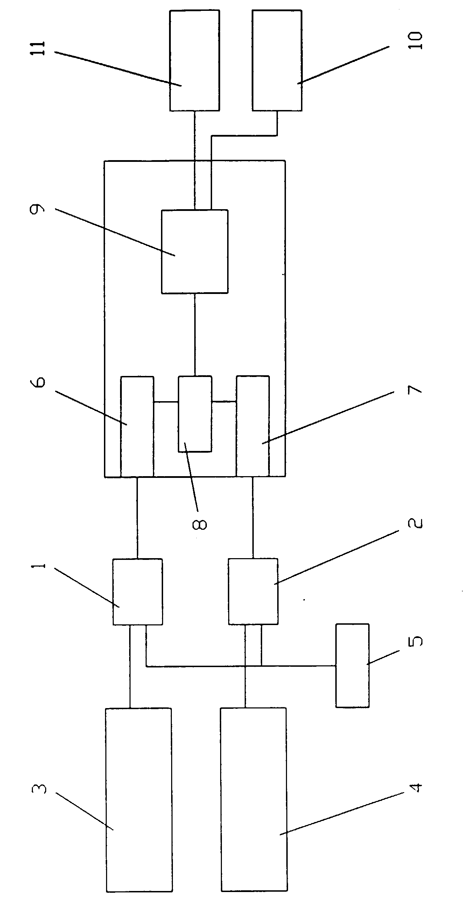

Die Zeichnung zeigt ein Ausführungsbeispiel der Erfindung und zwar in Form eines Prinzipschaltbildes.

Die Ausgänge zweier UND-Glieder 1 und 2, die an ihrem einen Eingang jeweils mit einem den Einschaltzustand und einem den Ausschaltzustand des Stellantriebsmotors abfühlenden Sensor 3, 4 und an ihrem anderen Eingang mit einem Zeitgeber 5 verbunden sind, werden jeweils an die Eingänge eines Stellwerkes 6, 7 geführt. Die beiden Stellwerke 6, 7 sind an einen Zähler 8 angeschlossen, wobei das Stellwerk 6 für den Einschaltzustand den Zählerstand erhöht und das Stellwerk 7 für den Ausschaltzustand den Zählerstand erniedrigt. Dabei sind die Zählinkremente des Stellwerkes 6 mit beispielsweise + 3 und die des Stellwerkes 7 mit - 1 der Temperaturcharakteristik des nicht dargestellten Stellantriebsmotors gemäß unterschiedlich gewählt. Die vom Zählwerk 8 erfaßte Differenz zwischen der Dauer der Einschaltzustände und der Ausschaltzustande werden einem Vergleichsglied 9 zugeführt, welches mit einer Motorabschaltvorrichtung 10 verbunden ist. Außerdem ist am Vergleichsglied 9 noch eine Leuchtdiodenanordnung 11 angeschlossen, wobei die Überschreitung der Laufzeit durch Blinken einer Leuchtdiode angezeigt wird.

Über die beiden UND-Glieder 1 und 2 erhalten die Stellwerke 6 und 7 fortlaufend Impulse vom Zeitgeber 5. Sobald der Motor eingeschaltet wird, wird diese Information über den Sensor 3 und das UND-Glied 1 an das Stellwerk 6 weitergegeben. Bei jedem Zeitimpuls wird der Zählerstand des Zählwerkes 8 um den im Stellwerk 6 eingegebenen Wert, im vorliegenden Fall um 3, erhöht. Beim Ausschalten des Motors spricht der Sensor 4 an und über das UND-Glied 2 erhält das Stellwerk 7 Zeitimpulse, wobei der eingestellte Wert, hier - 1, wiederum dem Zählwerk 8 zugeführt wird. Die durch das Stellwerk 7 veranlaßte Rückwärtszählung erfolgt höchstens bis auf den Wert O.

Die Werte des Zählwerkes 8 werden dem Vergleichsglied 9 zugeführt, in dessen Permanentspeicher ein einstellbarer Grenzwert vorhanden ist. Dieser wird mit dem vom Zählwerk 8 kommenden Wert verglichen und sobald der Zählwert den Grenzwert erreicht erfolgt über die Motorabschaltvorrichtung 10 die Ausschaltung des Motors, bis über das Stellwerk 7 das Zählwerk 8 auf O zurückgezählt ist. Durch Wahl der Werte für die Stellwerke 6 und 7 lassen sich verschiedene Einschaltdauer-Pausen-Verhältnisse einstellen.

Die in der Figur aufgebaute Vorrichtung kann ohne weiteres auch durch Softwarefunktionen eines Mikrocomputers realisiert werden, wobei in dessen Speicher das Programm und die den Zählinkrementen sowie den oberen und unteren Vergleichswert entsprechenden Konstanten eingegeben sind.

Die erfindungsgemäße Vorrichtung kann auch über eine serielle Schnittstelle an eine Zentralsteuerung angeschlossen werden. Die Werte des Motors wie: OFFEN-Stellung, ZU-Stellung, Einschaltzustand, Laufzeit usw. können dann zentral abgefragt werden. Die Steuerung kann übergeordnet von einer Zentrale erfolgen, wobei dann z.B. bei Steuerung über die Zentrale die Einzelsteuerung abgeschaltet wird.

## Patentansprüche

1. Verfahren zur Vermeidung von Überhitzung bei Elektromotoren für Stellantriebe, insbesondere an Fenstern, Türen, Markisen, Rolladen od. dgl., wobei fortlaufend die Einschalt- und Ausschaltzustände des Motors erfaßt und mittels wenigstens eines Stellwerks (6, 7) die Dauer der Einschalt- sowie der Ausschaltzustände bewertet wird, indem Zeitabschnitten der Dauer der Einschaltzustände sowie der Dauer der Ausschaltzustände Zählinkremente zugeordnet werden und durch Verstellen eines Zählwerks (8) um die Zählinkremente von der bewerteten Dauer der Einschaltzustände die bewertete Dauer der Ausschaltzustände abgezogen wird und anschließend der Differenzwert mit einem insbesondere einstellbaren Grenzwert verglichen, bei Überschreiten des Grenzwerts eine Abschaltvorrichtung für den Motor betätigt und dieser solange abgeschaltet wird, bis der Differenzwert einen bestimmten unter dem Grenzwert liegenden Betrag, insbesondere den Wert Null, erreicht hat, dadurch gekennzeichnet, daß den Zeitabschnitten der Dauer der Einschaltzustände sowie der Dauer der Ausschaltzustände bei jeweils gleicher Länge der Zeitabschnitte jeweils konstante Zählinkremente zugeordnet und diese zuvor an dem wenigstens einen Stellwerk (6, 7) eingegeben werden.

2. Verfahren nach Anspruch 1, dadurch gekennzeichnet, daß den Einschaltzuständen Zählinkremente zugeordnet werden, welche von den den Ausschaltzuständen zugeordneten Zählinkrementen verschieden sind.

3. Vorrichtung zur Ausübung des Verfahrens nach Anspruch 1 oder 2 mit wenigstens einem Stellwerk (6, 7) zum Verstellen des Zählerstands an einem Zählwerk (8), wobei im Einschaltzustand der Zählerstand erhöht und im Ausschaltzustand der Zählerstand erniedrigt wird und das Zählwerk (8) mit einem Vergleichsglied (9) verbunden ist, das den Zählerstand mit einem einstellbaren Grenzwert vergleicht und seinerseits mit einer Motorabschaltvorrichtung (10) verbunden ist, dadurch gekennzeichnet, daß die einen Eingänge von zwei UND-Gliedern (1, 2) mit einem Zeitgeber (5) und die anderen je mit einem Sensor (3, 4) für den Ausschalt- und den Einschaltzustand des Motors verbunden sind sowie die Ausgänge an je ein Stellwerk (6, 7) für das Zählwerk (8) angeschlossen sind, wobei das Stellwerk (6) für den Einschaltzustand den Zählerstand für gleiche Zeitabschnitte um konstante Zählinkremente erhöht und das Stellwerk (7) für den Ausschaltzustand den Zählerstand für gleiche Zeitabschnitte um konstante Zählinkremente erniedrigt und an beiden Stellwerken (6, 7) die betreffenden Zählinkremente eingebbar sind.

4. Vorrichtung nach Anspruch 3, dadurch gekennzeichnet, daß das Stellwerk (6) für den Einschaltzustand einstellbar ist und sich der Zählerstand des Zählwerkes (8) bei jedem Impuls des Zeitgebers (5) um den eingestellten Wert des Stellwerkes (6) erhöht.

5. Vorrichtung nach Anspruch 3 oder 4, dadurch gekennzeichnet, daß das Vergleichsglied (9) mit einer Anzeigevorrichtung (11), insbesondere einer Leuchtdiode (LED) für die Überschreitung des Grenzwertes verbunden ist.

6. Vorrichtung nach einem der vorhergehenden Ansprüche 3 bis 5, gekennzeichnet durch die Anordnung eines Mikrocomputers, wobei mindestens einige der Steuerelemente als Programmteile ausgebildet sind und der Computer damit Steuerfunktionen übernimmt.

## Claims

1. Method for avoiding the overheating of electric motors for actuating drives, in particular on windows, doors, blinds, roller blinds or the like, wherein, continuously, the switched on and the switched off states of the motor are determined and the duration of the switched on states and that of the switched off states are evaluated by means of at least one control unit (6, 7), in that time sections of the duration of the switched on states and of the duration of the switched off states are allocated to counting increments and, by means of shifting a counting unit (8) by the counting increments, the evaluated duration of the switched off states is subtracted from the evaluated duration of the switched on states and, subsequently, the differential value is compared to a limit value, which is, in particular, adjustable, wherein if the limit value is exceeded, a switching off device for the motor is activated and the motor is switched off until the differential value has reached a given amount which is less than the limit value, in particular the value nil,
characterised in that, if the time sections are of the same length in each case, counting increments, which are constant in each case, are allocated to the time sections of the duration of the switched on states and of the duration of the switched off states, and these counting increments are previously entered on the at least one control unit (6, 7).

2. Method according to Claim 1, characterised in that counting increments which are different from the counting increments which are allocated to the switched off states are allocated to the switched on states.

3. Device for performing the method according to Claim 1 or 2 with at least one control unit (6, 7) for shifting the count level on a counting unit (8), wherein, in the switched on state, the count level is increased and, in the switched off state the count level is reduced, and the counting unit (8) is connected to a comparator (9) which compares the count level to an adjustable limit value and is, for its part, connected to a device (10) for switching off the motor, characterised in that the one inputs of two AND elements (1,2) are connected to a timer (5) and the others are connected, in each case, to a sensor (3, 4) for the switched off state and the switched on state of the motor and the outputs are connected, in each case, to one control unit (6, 7) for the counting unit (8) wherein the control unit (6) for the switched on state increases the count level by constant counting increments for equal time sections and the control unit (7) for the switched off state reduces the count level by constant counting increments for equal time sections and the relevant counting increments can be entered on both control units (6, 7).

4. Device according to Claim 3, characterised in that the control unit (6) for the switched on state is adjustable and the count level of the counting unit (8) is increased at each pulse of the timer (5) by the set value of the control unit (6).

5. Device according to Claim 3 or 4, characterised in that the comparator (9) is connected to a display device (11), in particular a light emitting diode (LED), for indicating when the limit value has been exceeded.

6. Device according to one of the preceding Claims 3 to 5, characterised by the provision of a microcomputer, wherein at least a few of the control elements are formed as program parts and the computer thus assumes control functions.

## Revendications

1. Procédé pour éviter la surchauffe de moteurs électriques pour des servomécanismes, notamment sur des fenêtres, des portes, des stores, des volets roulants ou similaires, les états de connexion et de déconnexion du moteur étant enregistrés en continu et la durée des états de connexion ainsi que des états de déconnexion étant évaluée à l'aide d'au moins une unité de commande (6, 7), par le fait que des incréments de comptage sont associés à des intervalles de temps de la durée des états de connexion ainsi que de la durée des états de déconnexion, que la durée évaluée des états de déconnexion est soustraite de la durée évaluée des états de connexion en modifiant la valeur d'un compteur (8) du montant de ces incréments de comptage, et qu'enfin la valeur différentielle est comparée à une valeur limite notamment réglable, qu'un dispositif de coupure du moteur est actionné en cas de dépassement de la valeur limite et que ce moteur reste coupé jusqu'à ce que la valeur différentielle ait atteint une valeur donnée située en dessous de la valeur limite, notamment la valeur zéro, **caractérisé** en ce que des incréments de comptage constants respectifs sont, pour des longueurs identiques respectives des intervalles de temps, associés aux intervalles de temps de la durée des états de connexion ainsi que de la durée des états de déconnexion, et ces incréments de comptage sont préalablement inscrits dans l'unité ou les unités de commande (6, 7).

2. Procédé selon la revendication 1, **caractérisé** en ce qu'on associe aux états de connexion des incréments de comptage qui sont différents des incréments de comptage associés aux états de déconnexion.

3. Dispositif pour la mise en oeuvre du procédé selon la revendication 1 ou 2, avec au moins une unité de commande (6, 7) pour modifier la valeur d'un compteur (8), la valeur du compteur étant augmentée dans l'état de connexion et diminuée dans l'état de déconnexion, et le compteur (8) étant relié à un élément comparateur (9), qui compare la valeur du compteur à une valeur limite réglable et qui est lui-même relié à un dispositif (10) de coupure du moteur, **caractérisé** en ce que les premières entrées de deux éléments ET (1, 2) sont raccordées à une horloge (5) et les autres entrées à un capteur respectif (3, 4) pour l'état de connexion et l'état de déconnexion du moteur, tandis que les sorties sont raccordées à une unité de commande respective (6, 7) pour le compteur (8), l'unité de commande (6) pour l'état de connexion augmentant la valeur du compteur d'incréments de comptage constants pour des intervalles de temps identiques et l'unité de commande (7) pour l'état de déconnexion diminuant la valeur du compteur d'incréments de comptage constants pour des intervalles de temps identiques, et les incréments de comptage concernés pouvant être inscrits dans les deux unités de commande (6, 7).

4. Dispositif selon la revendication 3, **caractérisé** en ce que l'unité de commande (6) pour l'état de connexion est réglable, et la valeur du compteur (8) augmente de la valeur réglée de l'unité de commande (6) à chaque impulsion de l'horloge (5).

5. Dispositif selon la revendication 3 ou 4, **caractérisé** en ce que l'élément comparateur (9) est relié à un dispositif indicateur (11), notamment une diode électroluminescente (D.E.L.) pour le dépassement de la valeur limite.

6. Dispositif selon une des revendications précédentes 3 à 5, **caractérisé** par l'installation d'un micro-ordinateur, au moins quelques-uns des éléments de commande étant réalisés sous la forme de parties de programme, et l'ordinateur assumant ainsi des fonctions de commande.
